# Europäisches Patentamt
# European Patent Office
# Office européen des brevets

(19)

(11) Numéro de publication: **0 168 310**
**B1**

(12) **FASCICULE DE BREVET EUROPEEN**

(45) Date de publication du fascicule du brevet:
16.09.87

(51) Int. Cl.⁴: **H 02 B 13/02**

(21) Numéro de dépôt: 85401276.2

(22) Date de dépôt: 25.06.85

(54) Coffret limitant le développement et les effets des court-circuits pour appareils électriques.

(30) Priorité: 06.07.84 FR 8410773

(43) Date de publication de la demande:
15.01.86 Bulletin 86/3

(45) Mention de la délivrance du brevet:
16.09.87 Bulletin 87/38

(84) Etats contractants désignés:
DE GB IT

(56) Documents cités:
GB - A - 1 097 051
US - A - 3 072 736

(73) Titulaire: **LA TELEMECANIQUE ELECTRIQUE, 33 bis, avenue du Maréchal Joffre, F-92000 Nanterre (FR)**

(72) Inventeur: **Lanux, Claude, 101 A, rue des Marcs d'Or, F-21000 Dijon (FR)**
Inventeur: **Thierry, Jean-Pierre, Rue des Espaces Verts, F-21570 Couternon (FR)**

(74) Mandataire: **Marquer, Francis et ai, CABINET MOUTARD 35, avenue Victor Hugo Résidence Champfleury, F-78180 Voisins-le-Bretonneux (FR)**

ACTORUM AG

## Description

La présente invention concerne un coffret pour appareils électriques de distribution et/ou de protection embrochable sur un jeu de barres de distribution électrique, comprenant une enveloppe qui détermine une enceinte logeant les appareillages électriques et comprenant des pièces de connexion desdits appareillages au jeu de barres de distribution.

Il est connu d'utiliser de tels coffrets pour des unités amovibles de dérivation embrochables sur des canalisations de puissance et contenant des appareillages de protection notamment contre les surintensités et les surcharges. Il est cependant difficile de maîtriser le développement des courts-circuits accidentels engendrés à l'intérieur des coffrets en amont des appareillages de protection. Dans certains cas, ces courts-circuits peuvent provoquer des déflagrations et donc des projections de pièces ou de morceaux de tôlerie à l'extérieur du coffret (voir le document GB-A-1 097 051).

L'invention a en particulier pour but de contribuer à maîtriser le développement de l'arc consécutif à un court-circuit à l'intérieur d'un coffret du type précédemment décrit, tout en apportant en combinaison une construction du coffret qui minimise des risques de projections de pièces sur le personnel ou le matériel proche du coffret en cas de déflagration.

Selon l'invention, dans un coffret pour appareils électriques du type décrit dans le préambule, l'enceinte est partagée en deux volumes par une cloison mécaniquement résistante, le premier volume constituant un compartiment qui contient les appareillages électriques et le deuxième volume constituant une préchambre qui contient les pièces de connexion des appareils au jeu de barres, la cloison résistante étant traversée par les pièces de connexion et formant un moyen de renvoi des ondes de surpression survenant dans la préchambre consécutivement à un court-circuit, tandis que la préchambre est délimitée par un élément de paroi susceptible de s'ouvrir en cas de surpression développée dans la préchambre.

L'agencement cloisonné du coffret selon l'invention permet ainsi d'isoler les pièces de connexion par rapport aux appareils de protection ou de commande et donc de maintenir dans la préchambre les arcs survenant par suite de courts-circuits par exemple supérieurs à 100 kA eff pendant 0,1 s entre les appareils et le jeu de barres, tandis que la cloison, de préférence munie d'un panneau d'amortissement réfractaire côté préchambre, et l'élément de paroi à rupture délimitant la préchambre par exemple à l'opposé de la cloison, permettent de limiter les effets des surpressions produites dans la préchambre par les phénomènes d'arc.

L'élément de paroi ouvrant peut être fixé à l'enveloppe le long d'une ligne de fixation résistante de préférence renforcée par une cornière ou un autre élément déterminant un bandeau de protection, et le long d'une ligne de rupture, par exemple à points de soudure peu résistants, parallèle à la ligne de fixation.

Un mode d'exécution de l'invention sera décrit ci-après à titre d'exemple non limitatif avec référence aux dessins annexés.

La figure 1 représente en perspective un coffret pour appareils électriques conforme à l'invention.

La figure 2 montre le coffret selon une vue semblable, une partie de l'enveloppe et notamment le couvercle étant enlevés.

La figure 3 est une vue partielle en plan du coffret, en coupe selon le plan III-III de la figure 4.

La figure 4 est une vue de face du coffret de la figure 3 en coupe selon le plan IV-IV.

La figure 5 montre le coffret en élévation et en coupe selon le plan V-V de la figure 4.

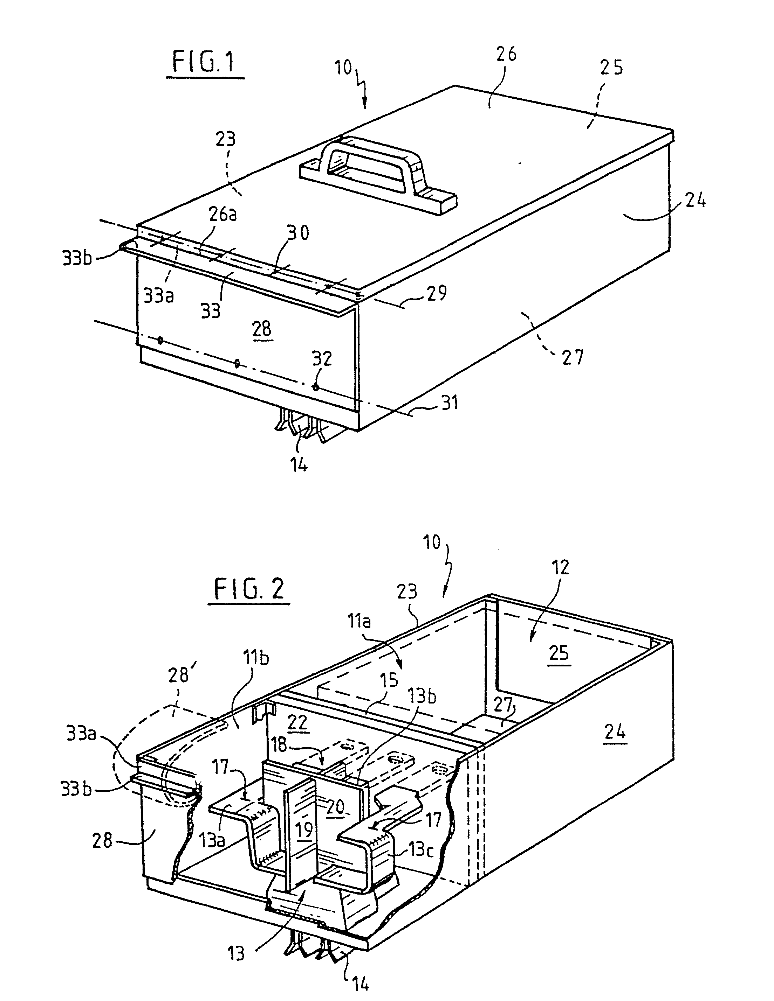

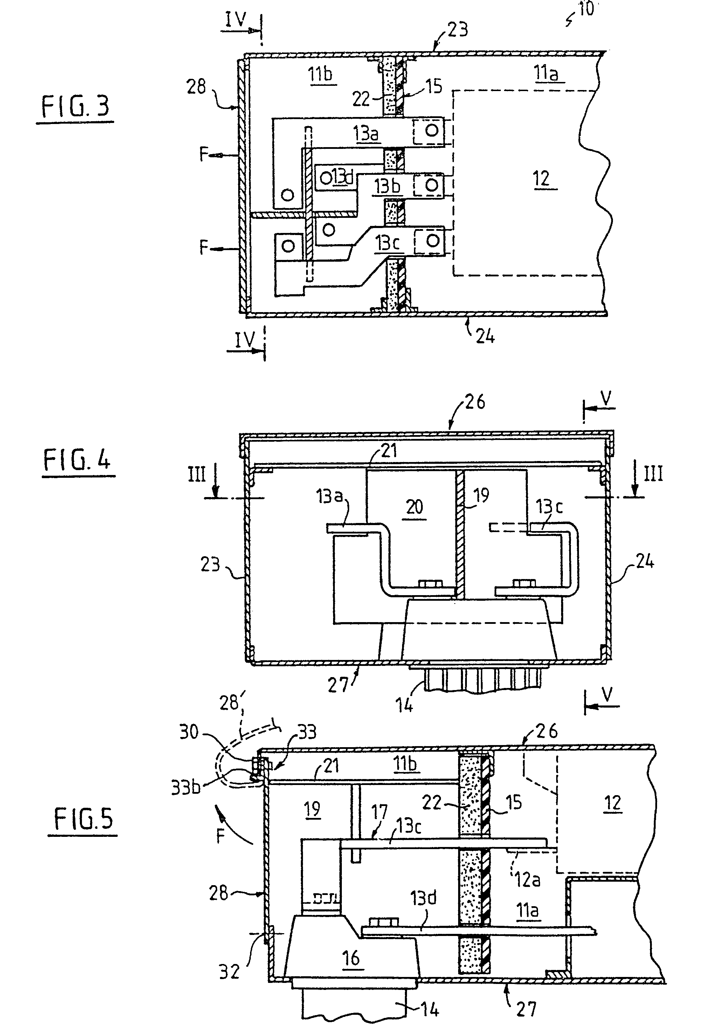

Le coffret représenté sur les figures comprend une enveloppe 10 déterminant une enceinte 11 qui loge des appareils électriques de commande et/ou de protection, tels que des contacteurs, interrupteurs, fusibles, disjoncteurs, ..., schématisés en 12 sur les figures 2, 3 et 5.

Le coffret constitue une unité amovible de dérivation pour canalisation de puissance; il comprend à cet effet des pièces de connexion 13 reliant les appareils 12 à un jeu de barres de distribution électrique non représentées, de façon à permettre l'embrochage du coffret sur les barres au moyen de pinces 14.

L'enceinte 11 du coffret est partagée en deux volumes 11a, 11b par une cloison 15 mécaniquement résistante; le volume 11a constitue un compartiment qui contient les appareils de commande et/ou de protection 12; le volume 11b forme une préchambre qui renferme la majeure partie des pièces de connexion 13.

Ces pièces de connexion comprennent plus en détail quatre éléments de connexion 13a, 13b, 13c, 13d à barreaux de cuivre convenablement découpés et pliés, d'une part montés sur un bloc isolant de traversée 16 par lequel ils sont reliés aux pinces respectives 14 et d'autre part reliés à des connexions 12a propres aux appareils 12 par traversée de la cloison 15.

Les pièces de connexion 13 sont recouvertes dans la préchambre 11b d'un revêtement isolant 17 qui vise à limiter le développement de l'arc survenant en cas de court-circuit localisé entre le jeu de barres et les appareils de protection.

Il est de plus prévu entre les différentes pièces de connexion 13a-13b un cloisonnement à croisillon 18 comportant deux plaquettes perpendiculaires en matériau isolant, emboîtées 19, 20 reposant sur le bloc isolant 16 et surmontées d'une plaquette de recouvrement 21 isolante. Le cloisonnement ainsi réalisé entre phases diminue considérablement les risques de court-circuit accidentel entre deux parties conductrices de polarité opposée.

A la cloison résistante 15 intérieure au coffret est associé du côté de la préchambre 11b un panneau d'absorption d'énergie 22 de préférence en matériau réfractaire, par exemple en vermiculite, qui amortit les chocs mécaniques et thermiques en cas de déflagration dans la préchambre, en s'appuyant sur la cloison 15 qui forme à la fois un moyen de séparation relativement étanche entre les volumes 11a et 11b et un moyen de résistance aux ondes de surpressions développées dans la préchambre. La cloison 15 et le panneau d'amortissement 22 sont fixés à l'enveloppe 10 par l'intermédiaire de cornières.

L'enveloppe 10 du coffret comprend une ceinture résistante munie de faces verticales 23, 24, 25, d'un couvercle 26 et d'un fond 27, ainsi qu'un élément de paroi ou panneau de rupture 28 situé en face avant. Les divers éléments de l'enveloppe sont assemblés par soudage et/ou boulonnage.

Le panneau de rupture 28 est fixé à l'enveloppe 10 du coffret d'une part le long d'une ligne de fixation supérieure résistante 29 par des boulons 30 (figure 5) et d'autre part le long d'une ligne inférieure de rupture 31, parallèle à la ligne de fixation et par exemple constituée de légers points de soudure 32.

Une cornière 33 est fixée à la partie supérieure de la face avant de l'enveloppe; elle présente une aile verticale 33a insérée entre un rabat 26a du couvercle 26 et le panneau de rupture 28 et maintenue par les boulons 30 de fixation dudit panneau, ainsi qu'une aile horizontale 33b qui contribue à diminuer les efforts d'arrachement du panneau; lors d'une déflagration produite dans la préchambre consécutivement à un phénomène d'arc, les points de soudure 32 cèdent et le panneau 28 vient selon la flèche F dans la position ouverte 28' illustrée partiellement sur la figure 2 et en tirets sur la figure 5 en s'enroulant autour de l'aile horizontale 33b de la cornière.

Il va de soi que l'on peut apporter au mode d'exécution décrit des modifications sans sortir du cadre de l'invention. En particulier, l'élément de rupture 28 peut être agencé de façon à délimiter une partie de la préchambre ailleurs qu'en face avant de celle-ci.

**Revendications**

1. Coffret pour appareils électriques de commande et/ou de protection, le coffret étant embrochable sur un jeu de barres de distribution électrique et comprenant une enveloppe (10) qui détermine une enceinte logeant les appareils électriques (12) et des pièces de connexion (13) desdits appareils au jeu de barres de distribution, caractérisé en ce que l'enceinte est partagée en deux volumes (11a, 11b) par une cloison mécaniquement résistante (15), le premier volume (11a) constituant un compartiment qui contient les appareillages électriques (12) et le deuxième volume (11b) constituant une préchambre, qui contient les pièces de connexion (13) des appareils au jeu de barres, la cloison résistante étant traversée par les pièces de connexion et formant un moyen de renvoi des ondes de surpression survenant dans la préchambre consécutivement à un court-circuit, tandis que la préchambre est délimitée par un élément de paroi (28) susceptible de s'ouvrir en cas de surpression développée dans la préchambre.

2. Coffret selon la revendication 1, caractérisé par le fait qu'un panneau d'absorption d'énergie (22) est appliqué contre la cloison mécaniquement résistante (15) du côté de la préchambre (11b).

3. Coffret selon la revendication 2, caractérisé par le fait que le panneau d'absorption d'énergie (22) est en matériau réfractaire.

4. Coffret selon l'une des revendications 1 à 3, caractérisé par le fait que l'élément de paroi (28) susceptible de céder en cas de surpression dans la préchambre est constitué par un panneau fixé à l'enveloppe (10) du coffret le long d'une ligne (29) de fixation résistante déterminant approximativement une charnière de pivotement du panneau lors de l'ouverture de celui-ci.

5. Coffret selon la revendication 4, caractérisé par le fait qu'une cornière (33) est fixée à l'enveloppe (10) du coffret de manière à recouvrir la ligne de fixation (29) du panneau (28) et présente une aile (33b) située dans un plan perpendiculaire à celui du panneau pour amortir l'effet du mouvement d'ouverture du panneau sur sa ligne de fixation.

6. Coffret selon la revendication 4 ou 5, caractérisé par le fait que le panneau (28) est relié à l'enveloppe (10) par une ligne de rupture (31) parallèle à la ligne de fixation (29).

7. Coffret selon l'une des revendications 1 à 6, caractérisé par la présence d'un revêtement isolant (17) sur les pièces de connexion (13) dans la préchambre (11b) afin de retarder la propagation de l'arc.

8. Coffret selon l'une des revendications 1 à 7, caractérisé par le fait qu'il est prévu dans la préchambre (11b) un cloisonnement (18) séparant les pièces de connexion (13) les unes des autres.

**Patentansprüche**

1. Kasten für elektrische Steurer- und/oder Schutzgeräte, wobei der Kasten auf eine Anzahl elektrischer Verteilerstäbe aufgesteckt werden kann und ein Gehäuse (10) enthält, welches einen Raum bildet, in dem die elektrischen Geräte (12) untergebracht sind und Teile (13), um besagte Geräte an die Verteilerstäbe anzuschliessen, dadurch gekennzeichnet, dass der Raum durch eine mechanisch widerstandsfähige Zwischenwand (15) in zwei Volumen (11a, 11b) aufgeteilt wird, wobei das erste Volumen (11a) einen abgeteilten Raum bildet, der die elektrischen Geräte (12) enthält und das zweite Volumen eine Vorkammer bildet, welche die Teile (13) für den Anschluss der Geräte an die Verteilerstäbe enthält, und die widerstandsfähige Zwischenwand von den Anschlussteilen durchquert wird und ein Mittel zur Rücksendung der in der Vorkammer infolge eines Kurzschlusses auftretenden Überdruckwellen bildet, während die Vorkammer von einem Wandelement (28) begrenzt wird, das sich im Falle eines in der Vorkammer entwickelten Überdrucks öffnen kann.

2. Kasten nach Anspruch 1, dadurch gekennzeichnet, dass, auf der Seite der Vorkammer, eine Hitzaufnahmeplatte (22) auf der mechanisch widerstandsfähigen Zwischenwand (15) angebracht ist.

3. Kasten nach Anspruch 2, dadurch gekennzeichnet, dass die Hitzaufnahmeplatte (22) aus hitzebeständigem Material besteht.

4. Kasten nach einem der Ansprüche 1 bis 3, dadurch gekennzeichnet, dass das Wandelement (28), welches im Falle eines Überdrucks in der Vorkammer nachgeben soll, durch eine Platte gebildet wird, die auf dem Gehäuse (10) des Kastens befestigt ist, entlang einer widerstandsfähigen Befestigungslinie (29), die ungefähr ein Scharnier zum Schwenken der Platte bildet, wenn diese sich öffnet.

5. Kasten nach Anspruch 4, dadurch gekennzeichnet, dass ein Winkelprofil (33) auf dem Gehäuse (10) des Kastens so befestigt ist, dass es die Befestigungslinie (29) der Platte (28) bedeckt und einen senkrecht zur Ebene der Platte verlaufenden Schenkel (33b) besitzt, um die Wirkung der Öffnungsbewegung der Platte auf ihre Befestigungslinie abzuschwächen.

6. Kasten nach Anspruch 4 oder 5, dadurch gekennzeichnet, dass die Platte (28) mit dem Gehäuse (10) durch eine Bruchlinie (31), parallel zur Befestigungslinie (29), verbunden ist.

7. Kasten nach einem der Ansprüche 1 bis 6, gekennzeichnet durch eine Isolierverkleidung (17) der Verbindungsteile (13) in der Vorkammer (11b), um die Fortpflanzung des Lichtbogens zu verzögern.

8. Kasten nach einem der Ansprüche 1 bis 7, dadurch gekennzeichnet, dass in der Vorkammer (11b) eine Zwischenwand (18) vorgesehen ist, um die Verbindungsteile voneinander zu trennen.

## Claims

1. A casing for electrical control and/or protection apparatus, the casing being pluggable onto a set of electrical distribution bars and comprising an envelope (10) which defines an enclosure housing the electrical apparatus (12) and parts (13) for connecting said apparatus to the set of distribution bars, characterized in that the enclosure is separated into two volumes (11a, 11b) by a mechanically resistant wall (15), the first volume (11a) forming a compartment containing the electrical apparatus (12) and the second volume (11b) forming a chamber containing the parts (13) for connecting the apparatus to the set of bars, the resistant wall being traversed by the connection parts and forming a means for returning the overpressure waves occurring in the chamber following a short circuit, whereas the chamber is limited by a wall element (28) adapted to open in case of an overpressure developed in the chamber.

2. A casing according to claim 1, characterized in that an energy absorbing panel (22) is applied against the mechanically resistant wall (15) at the side of the chamber (11b).

3. Casing according to claim 2, characterized in that the energy absorbing panel (22) is made of a heat and shock proof material.

4. The casing according to one of claims 1 to 3, characterized in that the wall element (28) adapted to give way in case of an overpressure in the chamber is formed by a panel fixed to the envelope (10) of the casing, along a resistant fixing line (29) approximately defining a pivoting hinge of the panel when the latter opens.

5. The casing according to claim 4, characterized in that an angle iron (33) is fixed to the envelope (10) of the casing so as to cover the fixing line (29) of the panel (28), a wing (33b) of which is situated in a plane perpendicular to that of the panel so as to damp the effect of the opening movement of the panel on its fixing line.

6. The casing according to claim 4 or 5, characterized in that the panel (28) is connected to the envelope (10) by a breaking line (31) parallel to the fixing line (29).

7. The casing according to one of claims 1 to 6, characterized by the presence of an isolating coating (17) on the connection parts (13) in the chamber (11b) so as to delay the arc propagation.

8. The casing according to one of claims 1 to 7, characterized in that a wall (18) which separates the connection parts (13) from each other is provided in the chamber.

FIG.1

10

26

25

23

26a

33b

30

24

33a

33

29

28

27

32

31

14

FIG. 2

10

12

23

11a

11b

25

28'

15

33a

22

13b

27

24

33b

18

28

17

20

13a

19

17

13c

13

14

FIG. 3

FIG. 4

FIG. 5